# EUROPEAN PATENT APPLICATION

(11) **EP 2 784 995 A1**
(43) Date of publication of application: **01.10.2014**
(21) Application number: 14152713.5
(22) Date of filing: 27.01.2014
(51) Int. Cl.: H04L 12/761

(54) **Packet communication device, packet communication method, and packet communication program**

(30) Priority: 28.03.2013 JP 2013070690
(71) Applicant: FUJITSU LIMITED, Kawasaki-shi, Kanagawa 211-8588 (JP)
(72) Inventor: Sakumoto, Kazunori, Kawasaki-shi, Kanagawa 211-8588 (JP)
(74) Representative: Ward, James Norman

(57) **Abstract**

A packet communication device (11) includes a search unit (233) that searches, when having received a packet, for a combination of a label that identifies a transfer path of the packet and an output unit that outputs the packet to a physical line to which the transfer path is set. Further, the packet communication device (11) includes an identifying unit (234) that identifies a plurality of combinations including a common output unit that is the same output unit combined with a plurality of labels from among the combinations searched by the search unit (233). Further, the packet communication device (11) includes a multiplex unit (235) that multiplexes the plurality of labels combined with the common output unit in the packet to be output from the common output unit to the physical line when a plurality of combinations including the common output unit has been identified by the identifying unit (234).

## Description

### FIELD

The embodiment discussed herein is related to a packet communication device, a packet communication method, and a packet communication program.

### BACKGROUND

Conventionally, as a system of transferring a packet, a multi protocol label switching-transport profile (MPLS-TP) system is known. The MPLS-TP system is a technology of setting a transfer path of a logical packet called a label switched path (LSP) to a physical line that connects communication devices, and performing packet transfer using an MPLS label (hereinafter, simply referred to as a label) that identifies an LSP. A network that employs the MPLS-TP system is called an MPLS-TP network.

In the MPLS-TP network, each communication device holds a label table that indicates a relationship of a combination of an output label and an output IF (interface) corresponding to a combination of an input label and an input IF. Then, each communication device that has received a packet determines an output IF by searching the label table according to a label added to the received packet, rewrite the label added to the packet to an output label, and sends the packet to the physical line through the output IF. By repeating the rewriting of a label, the MPLS-TP system transfers a packet to a destination communication device. Note that a communication device arranged at an entrance of the MPLS-TP network first adds a label to a packet.

Further, in recent years, with a rapid increase in traffic of the MPLS-TP network, a system in the MPLS-TP system has been examined, in which a communication device at the entrance multicasts a packet to a plurality of communication devices serving as exits, in order to enhance effective use of a band of a physical line. As the system of multicasting a packet in the MPLS-TP system, a Point-to-Point (P2P) system and a Point to Multipoint (P2M) system are known.

Between them, in the P2P system, a plurality of LSPs (hereinafter, referred to as "P2P-LSPs") from the communication device at the entrance to the communication devices at the exits is set, and the communication device at the entrance copies a multicast packet to each of the plurality of P2P-LSPs and sends the packet. To the multicast packet copied to each of the plurality of P2P-LSPs, a label (hereinafter, referred to as "P2P-LSP label") that identifies each of the plurality of P2P-LSPs is added. The P2P-LSP label used in the P2P system is a label also used when the packet is unicasted.

Meanwhile, in the P2M system, one LSP (hereinafter, referred to as "P2M-LSP") from the communication device at the entrance to the communication devices at the exits is set, and a communication device at a branching point on the LSP copies and sends a multicast packet to one P2M-LSP. A label (hereinafter, referred to as "P2M-LSP label") that identifies the P2M-LSP is added to the multicast packet copied to the P2M-LSP. The P2M-LSP label used in the P2M system is a label different from a label used when the packet is unicasted.

Patent Literature 1: Japanese Laid-open Patent Publication No. 2006-74383

However, in the conventional technology, maintaining the label length within a specification and suppressing a waste of a band of a physical line to which a path is set are not taken into consideration.

That is, in the P2P system, a packet is copies to each of a plurality of P2P-LSPs that is a plurality of paths set to the same physical line. Therefore, there is concern of a waste of a band of the physical line. Meanwhile, in the P2M system, two different types of labels: a label used when a packet is unicasted, and a P2M-LSP label, are used. Therefore, there is concern of difficulty in maintaining the label length allowed to be added to a packet within a specification. To be specific, the label length to be allocated to an MPLS label is 20 bits, for example. It is preferable to divide and use the label length by a P2P LSP (unicast) and a P2M LSP (multicast). Therefore, there is concern of causing a problem in scalability of the number of labels.

Accordingly, it is an object in one aspect of an embodiment of the invention to provide a packet communication device, a packet communication method, and a packet communication program capable of maintaining the label length within a specification and suppressing a waste of a band of a physical line to which a pass is set.

### SUMMARY

According to an aspect of an embodiment, a packet communication device includes a search unit that searches, when having received a packet, for a combination of a label that identifies a transfer path of the packet and an output unit that outputs the packet to a physical line to which the transfer path is set; an identifying unit that identifies a plurality of combinations including a common output unit that is the same output unit combined with a plurality of the labels from among the combinations searched by the search unit; and a multiplex unit that multiplexes, when the plurality of combinations including the common output unit has been identified by the identifying unit, the plurality of the labels combined with the common output unit in the packet to be output from the common output unit to the physical line.

### BRIEF DESCRIPTION OF DRAWINGS

FIG. 1 is a diagram illustrating a configuration example of an MPLS-TP network of the present embodiment;
FIG. 2 is a block diagram illustrating an internal configuration of a communication device of the present embodiment;
FIG. 3 is a diagram illustrating an example of table content of an LER label table of a communication device as an Ingress-LER;
FIG. 4 is a diagram illustrating an example of table content of an LSR label table of a communication device as an LSR;
FIG. 5 is a diagram illustrating an example of table content of an LSR label table of a communication device as an LSR;
FIG. 6 is a diagram illustrating an example of table content of an LER label table of a communication device as an Egress-LER;
FIG. 7 is a diagram illustrating an example of a data structure of a packet to which labels are multiplexed and a multiplex number label is granted;
FIG. 8 is an illustrative diagram for describing a transfer example of a packet in the MPLS-TP network of the present embodiment;
FIG. 9 is a flowchart illustrating a processing procedure of a communication device as an Ingress-LER;
FIG. 10 is a flowchart illustrating a processing procedure of a communication device as an LSR;
FIG. 11 is a flowchart illustrating a processing procedure of a communication device as an Engress-LER;
FIG. 12 is a diagram for describing a setting example 1 of a label table;
FIG. 13 is a diagram for describing a setting example 2 of the label table;
FIG. 14 is a diagram for describing a processing procedure of the configuration illustrated in FIG. 13; and
FIG. 15 is a block diagram illustrating a communication device that executes a packet communication program.

### DESCRIPTION OF EMBODIMENT

Preferred embodiments of the present invention will be explained with reference to accompanying drawings.

Note that the disclosed technology is not limited by the embodiments.

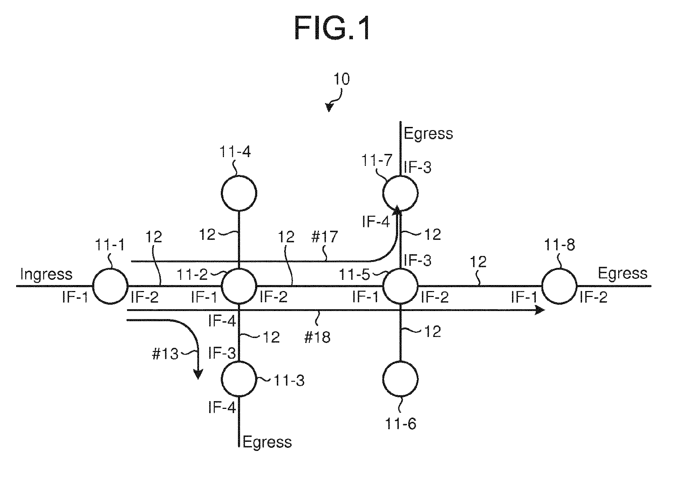

FIG. 1 is a diagram illustrating a configuration example of an MPLS-TP network of the present embodiment. An MPLS-TP network 10 illustrated in FIG. 1 includes a plurality of communication devices 11-1 to 11-8 that performs packet transfer using an MPLS label (hereinafter, simply referred to as a label) that identifies a transfer path of a logical packet called a label switched path (LSP). The communication device 11-1 and the communication device 11-2 are connected through a physical line 12. The communication device 11-2 and each of the communication devices 11-3 to 11-5 are connected through the physical line 12. The communication device 11-5 and each of the communication devices 11-6 to 11-8 are connected through the physical line 12. The communication devices 11-1, 11-3, 11-4, 11-6, 11-7, and 11-8 correspond to label edge routers (LER) arranged at termination parts of the MPLS-TP network 10. Especially, the communication device 11-1 corresponds to an Ingress-LER that is a router arranged at an entrance of packets among the termination parts of the MPLS-TP network 10. The communication devices 11-3, 11-7, and 11-8 correspond to Egress-LERs that are routers arranged at exists of packets among the termination parts of the MPLS-TP network 10. Further, the communication devices 11-2 and 11-5 correspond to label switch routers (LSRs) that are routers relaying packets transmitted/received between an Ingress-LER and an Egress-LER.

An LSP #13 serving as a transfer path of packets is set to the physical line 12 connecting the communication device 11-1 → the communication device 11-2 → the communication device 11-3. An LSP #17 serving as a transfer path of packets is set to the physical line 12 connecting the communication device 11-1 → the communication device 11-2 → the communication device 11-5 → the communication device 11-7. An LSP #18 serving as a transfer path of packets is set to the physical line 12 connecting the communication device 11-1 → the communication device 11-2 → the communication device 11-5 → the communication device 11-8. These LSP #13, LSP #17, and LSP #18 correspond to P2P-LSPs that are a plurality of LSPs including the communication device 11-1 as an Ingress-LER through the communication devices 11-3, 11-7, and 11-8 as Egress-LERs. That is, three LSPs of LSP #13, LSP #17, and LSP #18 are set to the physical line 12 connecting the communication device 11-1 → the communication device 11-2. Two LSPs of LSP #17 and LSP #18 are set to the physical line 12 connecting the communication device 11-2 → the communication device 11-5. LSP #13, LSP #17, and LSP #18 are respectively set to the physical line 12 connecting the communication device 11-2 → the communication device 11-3, the physical line 12 connecting the communication device 11-5 → the communication device 11-7, and the physical line 12 connecting the communication device 11-5 → the communication device 11-8. Note that, with regard to labels that identify a plurality of P2P-LSPs, a label that identifies LSP #13 is "L13", a label that identifies LSP #17 is "L17", and a label that identifies LSP #18 is "L18". Also, hereinafter, in a case where the communication devices 11-1 to 11-8 are not specially distinguished, the communication devices 11-1 to 11-8 are collectively written as a communication device 11.

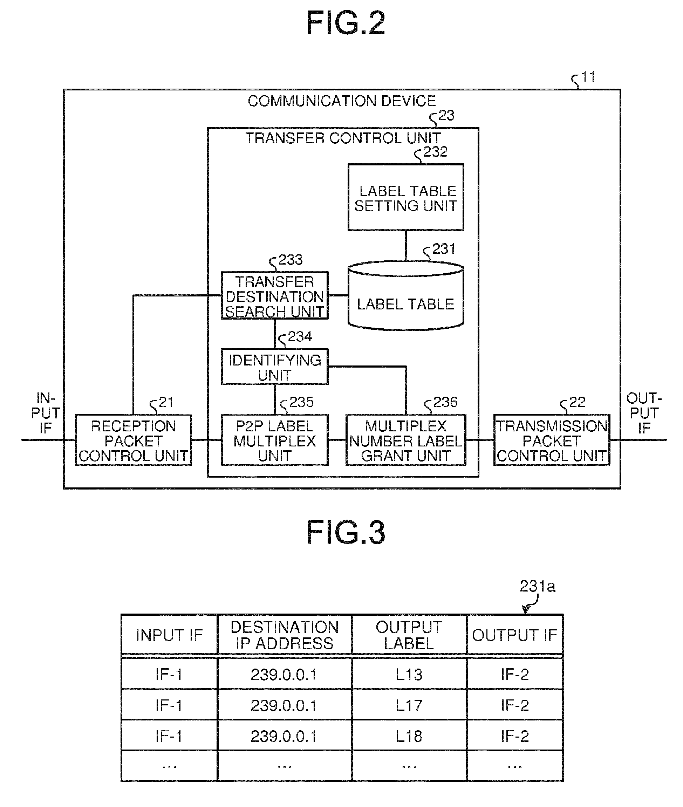

The communication device 11 transfers a multicast packet (hereinafter, appropriately referred to as "packet") using a P2P-LSP. FIG. 2 is a block diagram illustrating an internal configuration of the communication device of the present embodiment. The communication device 11 illustrated in FIG. 2 includes a reception packet control unit 21, a transmission packet control unit 22, and a transfer control unit 23.

The reception packet control unit 21 includes an input interface (IF)-n (n is a positive integer) that allows a packet to be input through the physical line 12 to which a P2P-LSP is set, and sequentially receives packets through the input IF-n.

The transmission packet control unit 22 includes an output IF-m (m is a positive integer) that outputs a packet to the physical line 12 to which the P2P-LSP is set and a transmission queue, and sequentially transmits packets queuing in the transmission queue to the physical line 12 through the output IF-m. Note that the output IF-m is an example of an output unit that outputs a packet to a physical line to which an LSP is set.

The transfer control unit 23 controls transfer of a packet. The transfer control unit 23 includes a label table 231, a label table setting unit 232, a transfer destination search unit 233, an identifying unit 234, a P2P label multiplex unit 235, and a multiplex number label grant unit 236.

The label table 231 corresponds to an LER label table 231a when the communication device 11 is the communication device 11-1 as an Ingress-LER. FIG. 3 is a diagram illustrating an example of table content of the LER label table of the communication device 11-1 as an Ingress-LER. As illustrated in FIG. 3, the LER label table 231a stores a combination of an input IF and a destination IP address and a combination of an output label and an output IF in association with each other. The input IF indicates the input IF-n that allows a packet to be input from an outside of the MPLS-TP network 10. The destination IP address indicates a destination IP address in a packet to be input from the input IF. The output label indicates a label that identifies LSP #13, LSP #17, and LSP #18 set to the physical line 12 connecting the communication device 11-1 → the communication device 11-2. The output IF indicates the output IF-m that outputs a packet to the physical line 12 to which LSP #13, LSP #17, and LSP #18 are set.

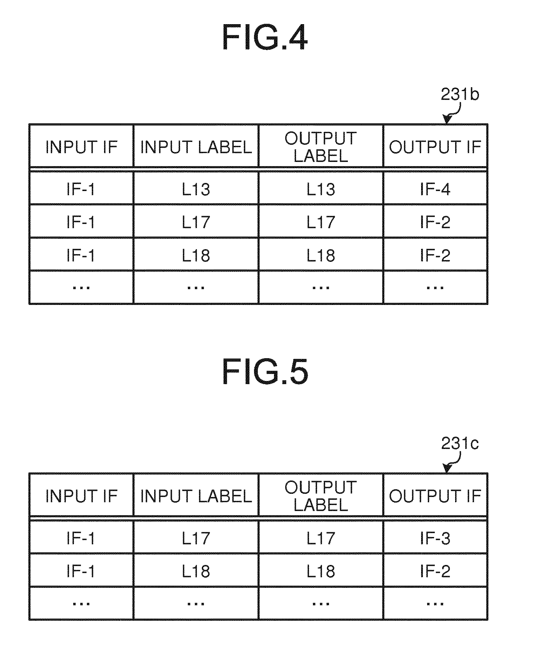

The label table 231 corresponds to an LSR label table 231b when the communication device 11 is the communication device 11-2 as an LSR. FIG. 4 is a diagram illustrating an example of table content of an LSR label table of the communication device 11-2 as an LSR. As illustrated in FIG. 4, the LSR label table 231b stores a combination of an input IF and an input label and a combination of an output label and an output IF in association with each other. The input IF indicates the input IF-n that allows a packet to be input from the physical line 12 connecting the communication device 11-1 → the communication device 11-2. The input label indicates a label that identifies LSP #13, LSP #17, and LSP #18 set to the physical line 12 connecting the communication device 11-1 → the communication device 11-2. The output label indicates labels that identify LSP #13 set to the physical line 12 connecting the communication device 11-2 → the communication device 11-3, and LSP #17 and LSP #18 set to the physical line 12 connecting the communication device 11-2 → the communication device 11-5. The output IF indicates the output IF-m that outputs a packet to the physical line 12 to which LSP #13 is set or the physical line 12 to which LSP #17 and LSP #18 are set.

Further, the label table 231 corresponds to an LSR label table 231c when the communication device 11 is the communication device 11-5 as an LSR. FIG. 5 is a diagram illustrating an example of table content of an LSR label table of the communication device 11-5 as an LSR. As illustrated in FIG. 5, the LSR label table 231c stores a combination of an input IF and an input label and a combination of an output label and an output IF in association with each other. The input IF indicates the input IF-n that allows a packet to be input from the physical line 12 connecting the communication device 11-2 → the communication device 11-5. The input label indicates a label that identifies LSP #17 and LSP #18 set to the physical line 12 connecting the communication device 11-2 → the communication device 11-5. The output label indicates labels that identify LSP #17 set to the physical line 12 connecting the communication device 11-5 → the communication device 11-7, and LSP #18 set to the physical line 12 connecting the communication device 11-5 → the communication device 11-8. The output IF indicates the output IF-m that outputs a packet to the physical line 12 to which LSP #17 is set, or the physical line 12 to which LSP #18 is set.

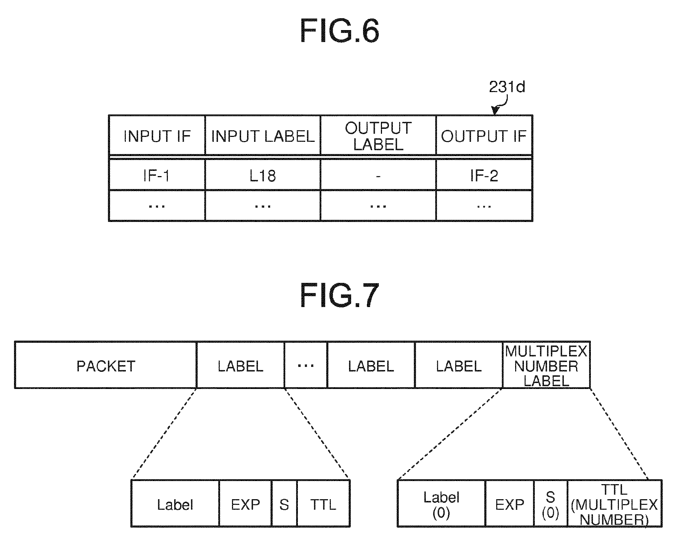

The label table 231 corresponds to a LER label table 231d when the communication device 11 is the communication device 11-8 as an Egress-LER. FIG. 6 is a diagram illustrating an example of table content of an LER label table of the communication device 11-8 as an Egress-LER. As illustrated in FIG. 6, the LER label table 231d stores an combination of an input IF and an input label and a combination of an output label and an output IF in association with each other. The input IF indicates an input IF-n that allows a packet to be input from the physical line 12 connecting the communication device 11-5 → the communication device 11-8. The input label indicates a label that identifies LSP #18 set to the physical line 12 connecting the communication device 11-5 → the communication device 11-8. Since the communication device 11-8 is an Egress-LER, the output label stores "-" expressing there is no LSP in subsequent stages of the communication device 11-8. The output IF indicates the output IF-m that outputs a packet to an outside of the MPLS-TP network 10.

The label table setting unit 232 obtains input information from an administrator through a command line interface (CLI) or a graphical user interface (GUI), and sets the obtained input information to the label table 231. For example, the label table setting unit 232 obtains a combination of an input IF and a destination IP address, a combination of an input IF and an input label, a combination of an output label and an output IF, and the like from the administrator as the input information. The label table setting unit 232 then sets the combination of an input IF and a destination IP address and the combination of an output label and an output IF to the LER label table 231a in association with each other. The label table setting unit 232 sets the combination of an input IF and an input label and the combination of an output label and an output IF to the LSR label tables 231b and 231c and the LER label table 231d in association with each other.

When having received a packet, the transfer destination search unit 233 searches for a combination of a label identifying the LSP of the packet and an output IF that outputs the packet to the physical line 12 to which the LSP is set, as the transfer destination.

Here, processing by the transfer destination search unit 233 will be described in detail. First, processing by the transfer destination search unit 233 when the communication device 11 is the communication device 11-1 as an Ingress-LER will be described. When having received a packet through the reception packet control unit 21, the transfer destination search unit 233 searches the label table 231 for a combination of an output label and an output IF corresponding to a combination of a destination IP address in the packet and an input IF that causes the packet to be input. For example, the label table 231 corresponds to the LER label table 231a illustrated in FIG. 3. Further, the destination IP address in the packet is "239.0.0.1" that is a multicast IP address, and the input IF that causes the packet to be input is the "input IF-1". In this case, the transfer destination search unit 233 searches for a combination of the output label "L13" and an output IF "output IF-2", a combination of the output label "L17" and an output IF "output IF-2", and a combination of the output label "L18" and an output IF "output IF-2". The transfer destination search unit 233 outputs the combinations of the output labels and the output IFs to the identifying unit 234 as search results.

Following that, processing by the transfer destination search unit 233 when the communication device 11 is the communication device 11-2 or 11-5 as an LSR or the communication device 11-8 as an Egress-LER will be described. The transfer destination search unit 233 determines whether a multiplex number label described below has been granted to the packet received through the reception packet control unit 21. When the multiplex number label has not been granted to the packet, the transfer destination search unit 233 searches the label table 231 for a combination of an output label and an output IF corresponding to the combination of a label added to the packet and an input IF that causes the packet to be input. The transfer destination search unit 233 outputs the combination of the output label and the output IF to the identifying unit 234 as a search result.

When the multiplex number label has been granted to the packet received through the reception packet control unit 21, the transfer destination search unit 233 sets a multiplex number of label indicated by the multiplex number label to the number of search N. The transfer destination search unit 233 then searches the label table 231 for a combination of an output label and an output IF corresponding to a combination of each label multiplexed in the packet and an input IF that causes the packet to be input by N times. For example, the label table 231 corresponds to the LSR label table 231b illustrated in FIG. 4. Further, the multiplex number of label indicated by the multiplex number label is "3", and the labels multiplexed in the packet are "L13", "L17", and "L18", and the input IF that causes the packet to be input is the "input IF-1". In this case, the transfer destination search unit 233 searches the LSR label table 231b by the multiplex number of label of "3" times. The transfer destination search unit 233 searches for a combination of the output label "L13" and an output IF "output IF-4", a combination of the output label "L17" and an output IF "output IF-2", and a combination of the output label "L18" and an output IF "IF-2". The transfer destination search unit 233 outputs the combinations of the output labels and the output IFs to the identifying unit 234 as search results.

The identifying unit 234 receives the combinations of the output labels and the output IFs from the transfer destination search unit 233 as the search results. The identifying unit 234 identifies a plurality of combinations including a common output IF that is the same output IF combined with a plurality of output labels from among the combinations of the output labels and the output IFs. The common output IF is an example of a common output unit.

Here, processing by the identifying unit 234 will be described in detail. First, processing by the identifying unit 234 when the communication device 11 is the communication device 11-1 as an Ingress-LER will be described. The identifying unit 234 determines whether a plurality of combinations of output labels and output IFs has been searched based on the search results. When only one combination of an output label and an output IF has been searched, the identifying unit 234 instructs the P2P label multiplex unit 235 about adding of the output label combined with the output IF to the packet to be output from the output IF.

When a plurality of combinations of output labels and output IFs has been searched, the identifying unit 234 identifies a plurality of combinations including a common output IF from among the plurality of searched combinations. For example, assume a case in which a plurality of combinations of the combination of the output label "L13" and the output IF "output IF-2", the combination of the output label "L17" and the output IF "output IF-2", and the combination of the output label "L18" and the output IF "output IF-2" has been searched. In this case, the identifying unit 234 identifies combinations including the same output IF "output IF-2" combined with the plurality of output labels "L13", "L17", and "L18" as the common output IF from among the searched combinations. When a plurality of combinations including the common output IF is not identified, the identifying unit 234 instructs the P2P label multiplex unit 235 about adding of the output label combined with the output IF to the packet to be output from the output IF to the physical line 12.

When a plurality of combinations including the common output IF has been searched, the identifying unit 234 instructs the P2P label multiplex unit 235 about multiplexing of a plurality of output labels combined with the common output IF in the packet to be output from the common output IF to the physical line 12. For example, assume a case in which a plurality of combinations including the output IF "output IF-2" is identified as the common output IF. In this case, the identifying unit 234 instructs the P2P label multiplex unit 235 about multiplexing of the plurality of output labels "L13", "L17", and "L18" combined with the output IF "output IF-2" in the packet to be output from the output IF "output IF-2" to the physical line 12.

Further, when instructing the P2P label multiplex unit 235 about multiplexing of the plurality of output labels in the packet to be output from the common output IF to the physical line 12, the identifying unit 234 notifies the multiplex number label grant unit 236 of the multiplex number that is the number of output labels to be multiplexed in the packet.

Following that, processing by the identifying unit 234 when the communication device 11 is the communication device 11-2 or 11-5 as an LSR or the communication device 11-8 as an Egress-LER will be described. The identifying unit 234 identifies a plurality of combinations including a common output IF from among the combinations of output labels and output IFs based on the search results. For example, assume the case in which the combination of the output label "L13" and the output IF "output IF-4", the combination of the output label "L17" and the output IF "output IF-2", and the combination of the output label "L18" and the output IF "output IF-2" has been searched as the search results. In this case, the identifying unit 234 identifies combinations including the same output IF "output IF-2" combined with the plurality of output labels "L17" and "L18" as the common output IF from among the searched combinations. When a plurality of combinations including the common output IF is not identified, the identifying unit 234 instructs the P2P label multiplex unit 235 about adding of the output label combined with the output IF to the packet to be output from the output IF to the physical line 12.

When a plurality of combinations including the common output IF is identified, the identifying unit 234 instructs the P2P label multiplex unit 235 about multiplexing of a plurality of output labels combined with the common output IF in the packet to be output from the common output IF to the physical line 12. For example, assume a case in which a plurality of combinations including the output IF "output IF-2" as the common output IF is identified. In this case, the identifying unit 234 instructs the P2P label multiplex unit 235 about multiplexing of the plurality of output labels "L17" and "L18" combined with the output IF "output IF-2" in the packet to be output from the output IF "output IF-2" to the physical line 12.

Further, when instructing the P2P label multiplex unit 235 about multiplexing of the plurality of output labels in the packet to be output from the output IF to the physical line 12, the identifying unit 234 notifies the multiplex number label grant unit 236 of the multiplex number that is the number of output labels to be multiplexed in the packet.

When a plurality of combinations including the common output IF has been identified by the identifying unit 234, the P2P label multiplex unit 235 multiplexes the plurality of labels combined with the common output IF in the packet to be output from the common output IF to the physical line 12 according to the instruction from the identifying unit 234.

When a plurality of combinations including the common output IF is not identified, the P2P label multiplex unit 235 adds the output label combined with the output IF to the packet to be output from the output IF to the physical line 12 according to the instruction from the identifying unit 234.

When only one combination of an output label and an output IF has been searched, the P2P label multiplex unit 235 adds the output label combined with the output IF to the packet to be output from the output IF according to the instruction from the identifying unit 234.

The multiplex number label grant unit 236 receives, from the identifying unit 234, the notification of the multiplex number that is the number of labels to be multiplexed in the packet by the P2P label multiplex unit 235. When having received the notification of the multiplex number from the identifying unit 234, the multiplex number label grant unit 236 grants a multiplex number label that is another label indicating the multiplex number to the packet to be output from the P2P label multiplex unit 235, and outputs the packet to which the multiplex number label is granted to the transmission packet control unit 22. When having not received the notification of the multiplex number from the identifying unit 234, the multiplex number label grant unit 236 outputs the packet to the transmission packet control unit 22 without granting the multiplex number label to the packet to be output from the P2P label multiplex unit 235.

Here, a data structure of a packet to which labels are multiplexed and a multiplex number label is granted will be described. FIG. 7 is a diagram illustrating an example of a data structure of a packet to which labels are multiplexed and a multiplex number label has been granted. To the packet illustrated in FIG. 7, labels identifying LSPs are multiplexed and a multiplex number label is granted. Each label includes a Label field of a 20-bit configuration, an EXP field of a 3-bit configuration, an S field of a 1-bit configuration, and a TTL field of an 8-bit configuration. The Label field corresponds to an identification number of each label expressed by "0" to "15". In the present embodiment, a label having the Label field of "0" is set as the multiplex number label. Further, the multiplex number is stored in the TTL field of the multiplex number label.

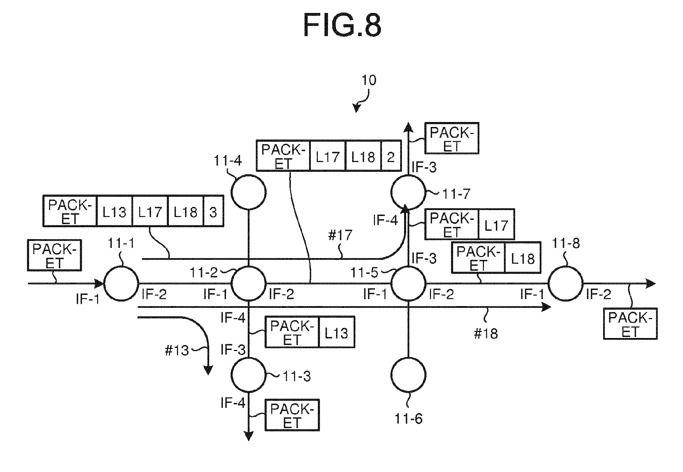

Next, a transfer example of a packet in the MPLS-TP network 10 of the present embodiment will be described. FIG. 8 is an illustrative diagram for describing a transfer example of a packet in the MPLS-TP network of the present embodiment. Note that the example of FIG. 8 illustrates the input IFs and the output IFs of the communication devices 11.

When having received a packet, the communication device 11-1 of the MPLS-TP network 10 searches the LER label table 231a for a combination of an output label and an output IF corresponding to a combination of a destination IP address in the packet and an input IF that causes the packet to be input. In this example, the destination IP address in the packet is a multicast IP address "239.0.0.1", and the input IF that causes the packet to be input is the "input IF-1". Then, the communication device 11-1 searches for the combination of the output label "L13" and the output IF "output IF-2", the combination of the output label "L17" and the output IF "output IF-2", and the combination of the output label "L18" and the output IF "output IF-2".

Following that, since a plurality of combinations of output labels and output IFs has been searched, the communication device 11-1 identifies a plurality of combinations including a common output IF from among the plurality of searched combinations. In this example, the communication device 11-1 identifies combinations including the same output IF "output IF-2" combined with the plurality of output labels "L13", "L17", and "L18" as the common output IF from among the searched combinations.

Following that, since a plurality of combinations including the common output IF has been identified, the communication device 11-1 multiplexes the plurality of labels combined with the common output IF in the packet to be output from the common output IF to the physical line 12. In this example, the communication device 11-1 multiplexes the three output labels "L13", "L17", and "L18" combined with the output IF "output IF-2" in one packet to be output from the output IF "output IF-2" as the common output IF to the physical line 12.

Following that, the communication device 11-1 grants a multiplex number label indicating a multiplex number that is the number of multiplexed labels to the packet, and sends the packet to the common output IF. In this example, the communication device 11-1 grants the multiplex number label indicating the multiplex number "3" to the packet, and sends the packet to the output IF "output IF-2" as the common output IF.

The communication device 11-2 receives the packet from the communication device 11-1. The communication device 11-2 searches the LSR label table 231b for a combination of an output label and an output IF corresponding to a combination of each label multiplexed in the packet and an input IF that causes the packet to be input by the multiplex number indicated by the multiplex number label granted to the packet. In this example, the multiplex number of label indicated by the multiplex number label is "3", the labels multiplexed to the packet are "L13", "L17", and "L18", and the input IF that causes the packet to be input is the "input IF-1". Therefore, the communication device 11-2 searches the LSR label table 231b for a combination of an output label and an output IF by the multiplex number of "3" times. The communication device 11-2 then searches for the combination of the output label "L13" and the output IF "output IF-4", the combination of the output label "L17" and the output IF "output IF-2", and the combination of the output label "L18" and the output IF "IF-2".

Following that, the communication device 11-2 identifies a plurality of combinations including a common output IF from among the combinations of the output labels and the output IFs. In this example, the communication device 11-2 identifies combinations including the same output IF "output IF-2" combined with the two output labels "L17" and "L18" as the common output IF from among the searched combinations.

Following that, since a plurality of combinations including the common output IF has been identified, the communication device 11-2 multiplexes the plurality of labels combined with the common output IF in the packet to be output from the common output IF to the physical line 12. In this example, the communication device 11-1 multiplexes the two output labels "L17" and "L18" combined with the output IF "output IF-2" in one packet to be output from the output IF "output IF-2" as the common output IF to the physical line 12.

Following that, the communication device 11-2 grants a multiplex number label indicating the multiplex number that is the number of multiplexed labels to the packet, and sends the packet to the common output IF. In this example, the communication device 11-2 grants the multiplex number label indicating the multiplex number "2" to the packet, and sends the packet to the output IF "output IF-2" as the common output IF.

Meanwhile, the communication device 11-2 adds the output label combined with the output IF to the packet to be output from the output IF that is not the common output IF to the physical line 12. In this example, the communication device 11-2 adds the output label "L13" to the packet to be output from the output IF "output IF-4" that is not the common output IF to the physical line 12.

The communication device 11-5 receives the packet from the communication device 11-2. The communication device 11-5 searches the LSR label table 231c for a combination of an output label and an output IF corresponding to a combination of each label multiplexed in the packet and an input IF that causes the packet to be input by the multiplex number indicated by the multiplex number label granted to the packet. In this example, the multiplex number of label indicated by the multiplex number label is "2", the labels multiplexed in the packet are "L17" and "L18", and the input IF that causes the packet to be input is the "input IF-1". Therefore, the communication device 11-5 searches the LSR label table 231c for a combination of an output label and an output IF by the multiplex number of "2" times. The communication device 11-5 then searches for the combination of the output label "L17" and the output IF "output IF-3" and the combination of the output label "L18" and the output IF "output IF-2".

Following that, the communication device 11-5 identifies a plurality of combinations including a common output IF from among the combinations of the output labels and the output IFs. In this example, the searched combinations are the combination of the output label "L17" and the output IF "output IF-3" and the combination of the output label "L18" and the output IF "output IF-2". Therefore, a plurality of combinations including a common output IF is not identified.

Following that, since a plurality of combinations including a common output IF is not identified, the communication device 11-5 adds the output label combined with the output IF to the packet to be output from the output IF that is not the common output IF to the physical line 12. In this example, the communication device 11-5 adds the output label "L17" to the packet to be output from the output IF "output IF-3" that is not the common output IF to the physical line 12. Further, the communication device 11-5 adds the output label "L18" to the packet to be output from the output IF "output IF-2" that is not the common output IF to the physical line 12.

The communication device 11-8 receives the packet from the communication device 11-5. Since the multiplex number label has not been granted to the packet, the communication device 11-8 searches the LER label table 231d for a combination of an output label and an output IF corresponding to a combination of the label added to the packet and an input IF that causes the packet to be input. In this example, the communication device 11-8 searches for a combination of the output label "-" and the output IF "output IF-2".

Following that, the communication device 11-8 deletes the label added to the packet from the packet, and sends the packet to the searched output IF. In this example, the communication device 11-8 deletes the output label "L18" added to the packet from the packet, and sends the packet to the searched output IF "output IF-2".

As described above, the communication device 11 of the present embodiment identifies a plurality of combinations including the same output IF combined with a plurality of labels as the common output IF from among the combinations of LSP labels and output IFs searched from a label table. When a plurality of combinations including the common output IF is identified, the communication device 11 of the present embodiment multiplexes the plurality of labels combined with the common output IF in one packet to be output from the common output IF to the physical line 12. Therefore, according to the present embodiment, a waste of a band of a physical line can be suppressed compared with a conventional P2P system that copies a packet to each of a plurality of P2P-LSPs set to the same physical line and outputs the packet. Further, according to the present embodiment, a label similar to a P2P-LSP label used in the P2P system is used. Therefore, separate use of the P2P-LSP label and the P2M-LSP label can be avoided, and the label length allowed to be added to a packet can be maintained within the specification. That is, according to the present embodiment, the label length can be maintained within the specification, and a waste of a band of a physical line to which a path is set can be suppressed.

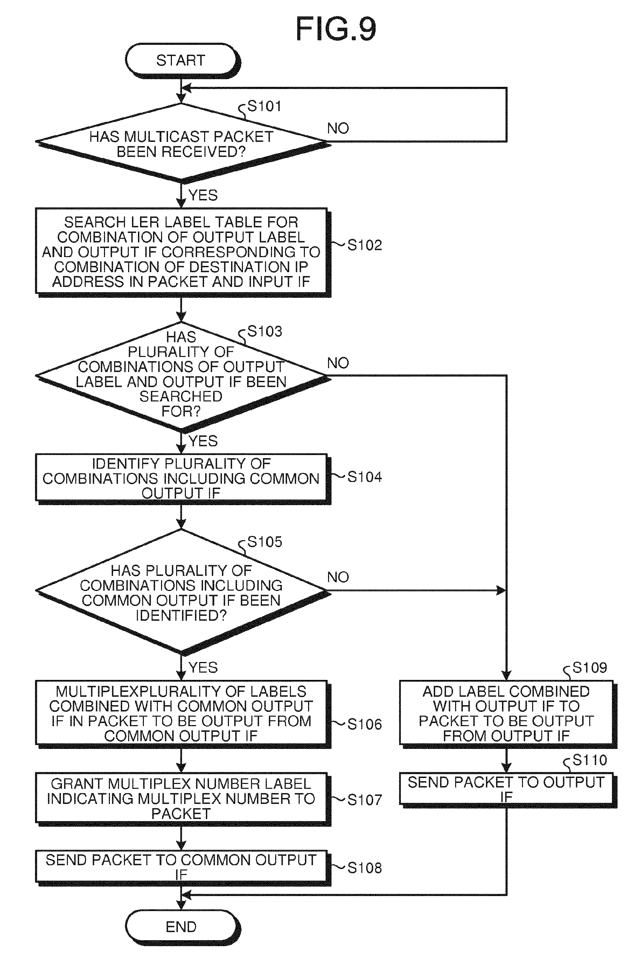

Next, an operation of the MPLS-TP network 10 of the present embodiment will be described. FIG. 9 is a flowchart illustrating a processing procedure of the communication device 11-1 as an Ingress-LER. As illustrated in FIG. 9, the transfer destination search unit 233 of the communication device 11-1 stands by when having not received a multicast packet (No in step S101).

When having received a multicast packet (Yes in step S101), the transfer destination search unit 233 searches the LER label table 231a for a combination of an output label and an output IF corresponding to a combination of a destination IP address in the packet and an input IF (step S102). The transfer destination search unit 233 outputs the combination of an output label and an output IF to the identifying unit 234 as a search result.

The identifying unit 234 determines whether a plurality of combinations of output labels and output IFs has been searched (step S103). When a plurality of combinations of output labels and output IFs (Yes in step S103), the identifying unit 234 identifies a plurality of combinations including a common output IF from among the plurality of searched combinations (step S104).

When a plurality of combinations including a common output IF has been identified (Yes in step S105), the P2P label multiplex unit 235 multiplexes the plurality of labels combined with the common output IF in the packet to be output from the common output IF to the physical line 12 (step S106).

The multiplex number label grant unit 236 grants, to the packet, a multiplex number label indicating the multiplex number that is the number of labels multiplexed in the packet (step S107). The transmission packet control unit 22 queues the packet in a transmission queue, and sends the queued packet to the physical line 12 through the common output IF (step S108).

Meanwhile, when a plurality of combinations of output labels and output IFs has not been searched (No in step S103), or a plurality of combinations including a common output IF has not been identified (No in step S105), the P2P label multiplex unit 235 performs the following processing. That is, the P2P label multiplex unit 235 adds the output label combined with the output IF to the packet to be output from the output IF (step S109). The transmission packet control unit 22 queues the packet in a transmission queue, and sends the queued packet to the physical line 12 through the output IF (step S110).

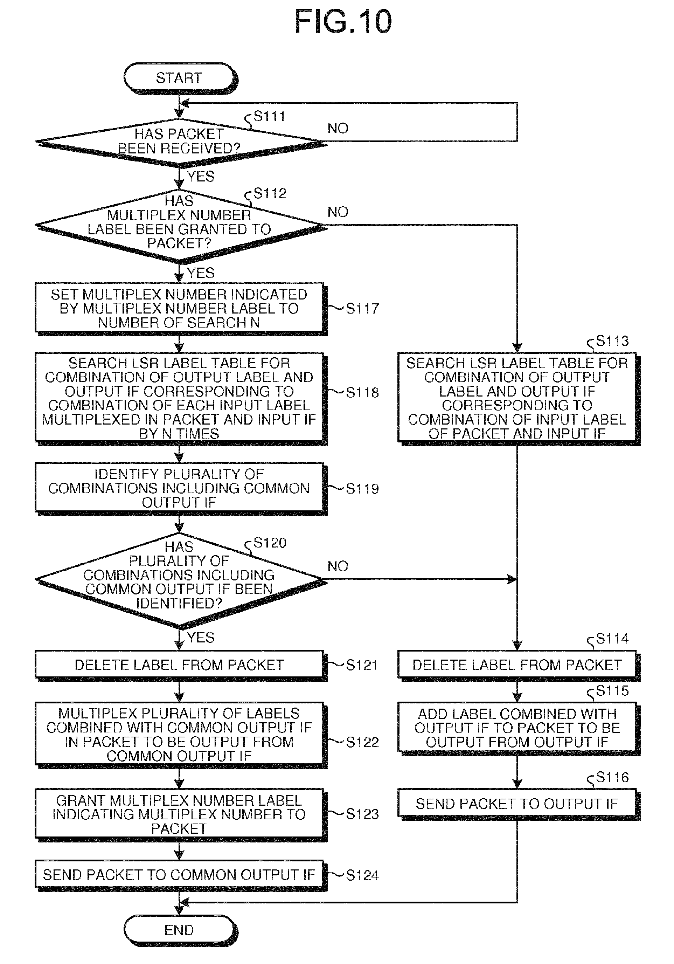

FIG. 10 is a flowchart illustrating a processing procedure of the communication device 11-2 as an LSR. As illustrated in FIG. 10, the transfer destination search unit 233 of the communication device 11-2 stands by, when having not received a packet (No in step S111).

When having received a packet (Yes in step S111), the transfer destination search unit 233 determines whether a multiplex number label has been granted to the received packet (step S112). When the multiplex number label has not been granted to the packet (No in step S112), the transfer destination search unit 233 searches the LSR label table 231b for a combination of an output label and an output IF corresponding to a combination of an input label and an input IF (step S113). The transfer destination search unit 233 outputs the combination of an output label and an output IF to the identifying unit 234 as a search result. Since only one combination of an output label and an output IF has been searched, the identifying unit 234 instructs the P2P label multiplex unit 235 about adding of the output label combined with the output IF to the packet to be output from the output IF.

The P2P label multiplex unit 235 deletes the input label from the received packet (step S114), and adds the output label combined with the output IF to the packet to be output from the output IF (step S115). The transmission packet control unit 22 queues the packet in the transmission queue, and sends the queued packet to the physical line 12 through the output IF (step S116).

Meanwhile, when the multiplex number label has been granted to the received packet (Yes in step S112), the transfer destination search unit 233 sets the multiplex number of label indicated by the multiplex number label to the number of search N (step S117).

The transfer destination search unit 233 searches the LSR label table 231b for a combination of an output label and an output IF corresponding to a combination of each input label multiplexed in the packet and an input IF by N times (step S118). The transfer destination search unit 233 outputs the combination of an output label and an output IF to the identifying unit 234 as a search result.

The identifying unit 234 identifies a plurality of combinations including a common output IF from among a plurality of combinations searched by N times (step S119).

When a plurality of combinations including a common output IF has not been identified (No in step S120), the P2P label multiplex unit 235 moves the processing to step S114.

When a plurality of combinations including a common output IF has been identified (Yes in step S120), the P2P label multiplex unit 235 deletes the input labels multiplexed in the packet from the packet (step S121). The P2P label multiplex unit 235 multiplexes the plurality of output labels combined with the common output IF in the packet to be output from the common output IF to the physical line 12 (step S122).

The multiplex number label grant unit 236 grants, to the packet, a multiplex number label indicating the number of labels multiplexed in the packet (step S123). The transmission packet control unit 22 queues the packet in the transmission queue, and sends the queued packet to the physical line 12 through the common output IF (step S124).

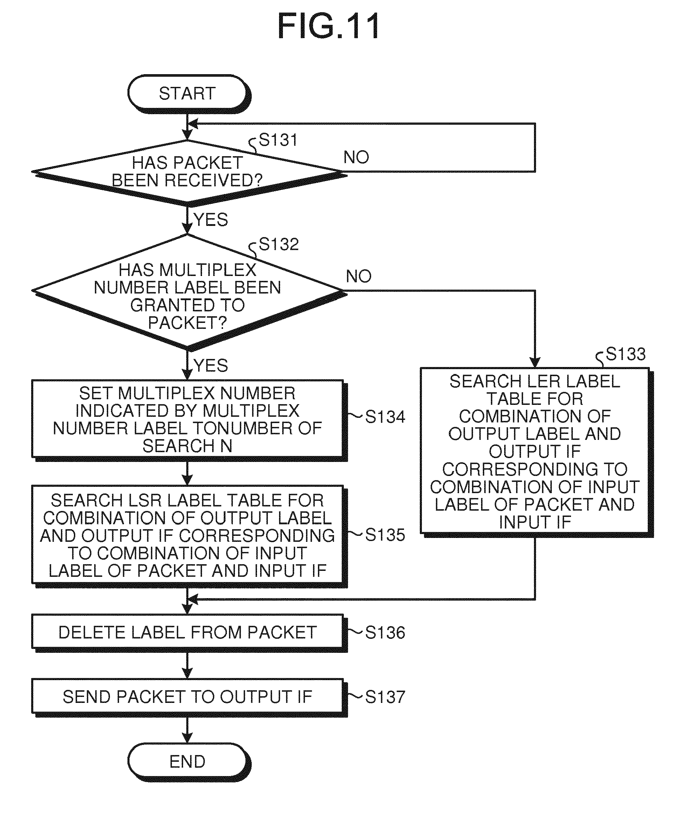

FIG. 11 is a flowchart illustrating a processing procedure of the communication device 11-8 as an Engress-LER. As illustrated in FIG. 11, the transfer destination search unit 233 of the communication device 11-8 stands by when having not received a packet (No in step S131).

When having received a packet (Yes in step S131), the transfer destination search unit 233 determines whether a multiplex number label has been granted to the received packet (step S132). When the multiplex number label has not been granted to the packet (No in step S132), the transfer destination search unit 233 searches the LER label table 231d for a combination of an output label and an output IF corresponding to a combination of an input label and an input IF (step S133). The transfer destination search unit 233 outputs the combination of an output label and an output IF to the identifying unit 234 as a search result. Since only one combination of an output label and an output IF has been searched, the identifying unit 234 instructs the P2P label multiplex unit 235 about adding of the output label combined with the output IF to the packet to be output from the output IF.

The P2P label multiplex unit 235 deletes the input label from the received packet (step S136), queues the packed in the transmission queue, and sends the queued packet to the physical line 12 through the output IF (step S137).

Meanwhile, when the multiplex number label has been granted to the received packet (Yes in step S132), the transfer destination search unit 233 sets the multiplex number of label indicated by the multiplex number label to the number of search N (step S134).

The transfer destination search unit 233 searches the LSR label table 231b for a combination of an output label and an output IF corresponding to a combination of each input label multiplexed in the packet and an input IF by N times (step S135). The transfer destination search unit 233 outputs the combination of an output label and an output IF to the identifying unit 234 as a search result. Since only one combination of an output label and an output IF has been searched, the identifying unit 234 instructs the P2P label multiplex unit 235 about adding of the output label combined with the output IF to the packet to be output from the output IF, and moves the processing to step S134.

As described above, the communication device 11 of the present embodiment identifies a plurality of combinations including the same output IF combined with a plurality of labels as a common output IF from among the combinations of LSP labels and output IFs searched from a label table. When a plurality of combinations including the common output IF has been identified, the communication device 11 of the present embodiment then multiplexes the plurality of labels combined with the common output IF in one packet to be output from the common output IF to the physical line 12. Therefore, according to the present embodiment, a waste of a band of a physical line can be suppressed compared with the conventional P2P system that copies and outputs a packet to a plurality of P2P-LSPs set to the same physical line. Further, according to the present embodiment, a label similar to the P2P-LSP label used in the P2P system is used, separate use of the P2P-LSP label and the P2M-LSP label can be avoided, and the label length allowed to be added to a packet can be maintained within the specification. That is, according to the present embodiment, the label length can be maintained within the specification and a waste of a band of a physical line to which a path is set can be suppressed.

Further, the communication device 11 of the present embodiment grants, to a packet, a multiplex number label indicating the number of labels to be multiplexed in a packet, and searches for a combination of a label and an output unit by the multiplex number indicated by the multiplex number label when having received a packet to which the multiplex number label is granted. The communication device 11 of the present embodiment then identifies a plurality of combinations including a common output IF from among the searched combinations, and multiplexes the plurality of labels combined with the common output IF in one packet to be output from the common output IF to the physical line 12 when a plurality of combinations has been identified. Therefore, according to the present embodiment, even when the communication device 11 is an LSR, a plurality of labels combined with a common output IF is multiplexed in a packet and the packet can be output to the same physical line 12. As a result, according to the present embodiment, a band of a physical line to which a path is set can be efficiently suppressed throughout the MPLS-TP network 10.

While an embodiment of the packet communication device disclosed in the present application has been described, the packet communication device disclosed in the present application can be implemented in various different embodiments other than the above-described embodiment.

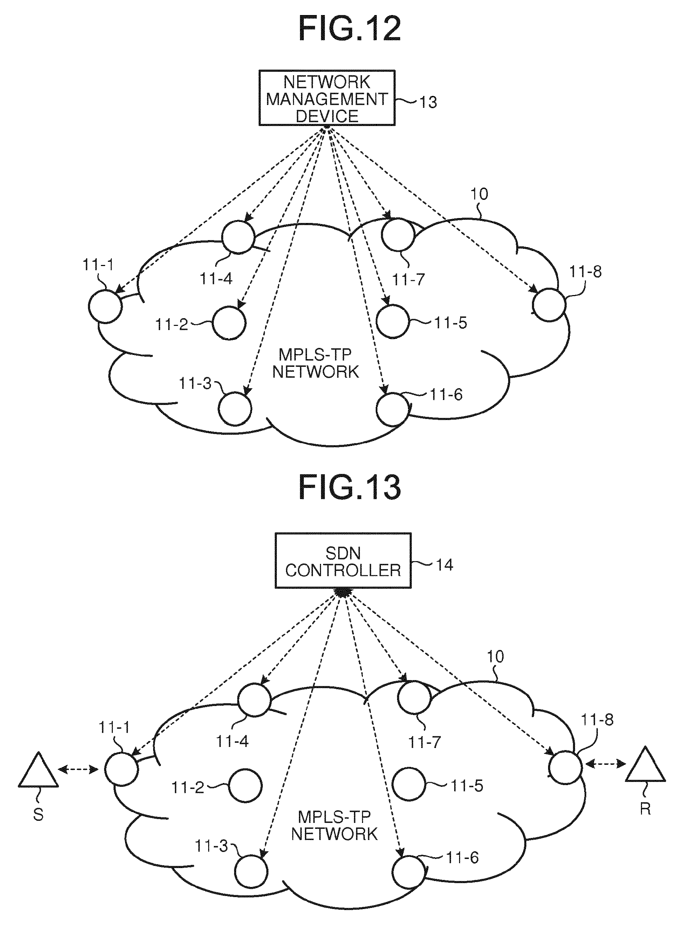

In the above embodiment, an example in which the label table setting unit 232 of the communication device 11 sets input information obtained from an administrator through a CLI or a GUI to the label table 231 has been described. However, the embodiment is not limited to this example. For example, as illustrated in FIG. 12, a network management device 13 provided outside the MPLS-TP network 10 may set the input information obtained from an administrator through a CLI or a GUI to the label table 231 of each communication device 11. FIG. 12 is a diagram for describing a setting example 1 of a label table. In the example illustrated in FIG. 2, the network management device 13 is connected with each communication device 11 inside the MPLS-TP network 10 in a communication capable manner. The network management device 13 then obtains a combination of an input IF and a destination IP address, and a combination of an input IF and an input label, a combination of an output label and an output IF, and the like from the administrator as the input information. The network management device 13 then sets the combination of an input IF and a destination IP address and the combination of an output label and an output IF to the LER label table 231a in association with each other. The label table setting unit 232 sets the combination of an input IF and an input label and the combination of an output label and an output IF to the LSR label tables 231b and 231c and the LER label table 231d in association with each other. Note that FIG. 12 is a diagram for describing the setting example 1 of a label table.

Further, for example, as illustrated in FIG. 13, a software defined network (SDN) controller 14 provided outside the MPLS-TP network 10 can dynamically set the label table 231 of each communication device 11. FIG. 13 is a diagram for describing a setting example 2 of a label table. In the example illustrated in FIG. 13, the SDN controller 14 is connected with the communication devices 11-1, 11-3, 11-4, 11-6, 11-7, and 11-8 as LERs among the communication devices 11 in the MPLS-TP network 10 in a communication capable manner. Further, the communication device 11-1 as an Ingress-LER is connected with the server S serving as a transmission source of data using a multicast protocol including an internet group multicast protocol (IGMP), a protocol independent multicast (PIM), and the like. Further, the communication device 11-8 as an Egress-LER is connected with a receiver R serving as a destination of data using a multicast protocol including an IGMP, a PIM, and the like.

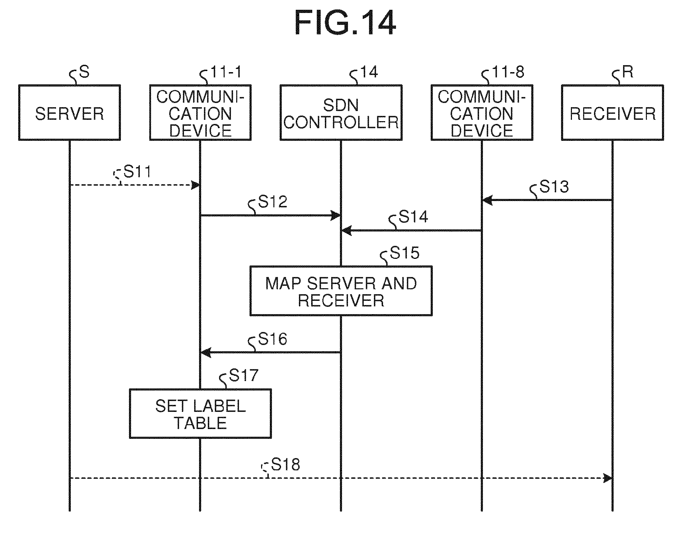

FIG. 14 is a diagram for describing a processing procedure of the configuration illustrated in FIG. 13. As illustrated in FIG. 14, the server S transmits a packet including a multicast destination IP address (hereinafter, simply referred to as "destination IP address") to the communication device 11-1 as an Ingress-LER (step S11).

The communication device 11-1 that has received the packet transmits a combination of an input IF and a destination IP address of the packet to the SDN controller 14 (step S12).

Meanwhile, the receiver R transmits a destination IP address scheduled to be received to the communication device 11-8 as an Egress-LER using the multicast protocol including an IGMP, a PIM, and the like (step S13).

The communication device 11-8 that has received the destination IP address transmits the combination of the received destination IP address and the output IF to which the receiver R is connected to the SDN controller 14 (step S14).

The SDN controller 14 maps the input IF of the server S and the output IF of the receiver R using the destination IP address as a key (step S15). That is, the SDN controller 14 generates a corresponding relationship between the combination of the input IF and the destination IP address and the combination of the output label of an LSP to be used and the output IF.

The SDN controller 14 instructs the communication device 11-1 to perform setting of a label table using the generated corresponding relationship (step S16).

The communication device 11-1 sets the combination of the input IF and the destination IP address and the combination of the output label and the output IF to the LER label table 231a in association with each other based on the instruction from the SDN controller 14 (step S17).

Following that, the communication device 11-1 identifies a plurality of combinations including the same output IF combined with a plurality of labels as a common output IF from among the combinations of LSP labels and output IFs searched from the LER label table 231a, as described in the embodiment. When a plurality of combinations including a common output IF has been identified, the communication device 11-1 multiplexes the plurality of labels combined with the common output IF in one packet to be output from the common output IF to the physical line 12. This enables the server S and the receiver R to transmit/receive the multicast packet (step S18).

As described above, the communication device 11 of the present embodiment can suppress a waste of a band of a physical line even under an environment in which the content of the label table 231 dynamically varies according to a connection state of the server S and the receiver R.

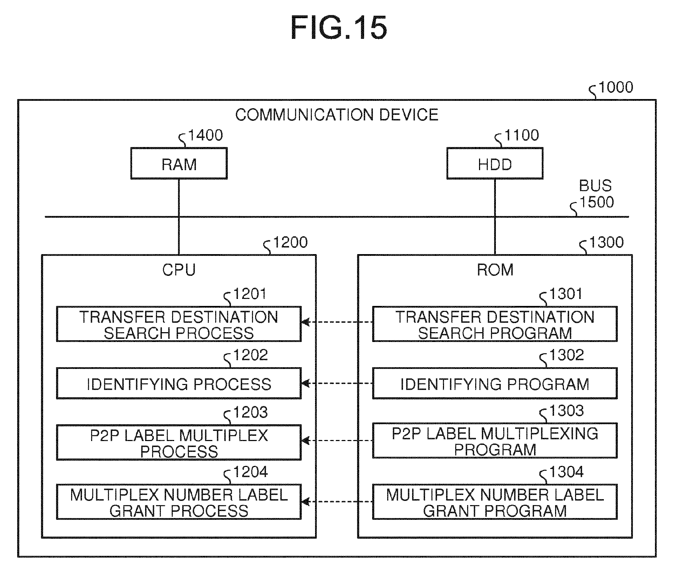

By the way, equivalent function to the communication device 11 can be realized by implementation of the function of the communication device 11 of the present embodiment as software, and execution of the software in a communication device. Hereinafter, an example of the communication device that executes a packet communication program in which the function of the communication device 11 is implemented as software. FIG. 15 is a block diagram illustrating a communication device that executes the packet communication program.

As illustrated in FIG. 15, a communication device 1000 includes a hard disk drive (HDD) 1100, a central processing unit (CPU) 1200, a read only memory (ROM) 1300, and a random access memory (RAM) 1400. The HDD 1100, the CPU 1200, the ROM 1300, and the RAM 1400 are connected by a bus 1500.

The ROM 1300 stores a packet communication program that exerts a similar function to the present embodiment, that is, a transfer destination search program 1301, an identifying program 1302, a P2P label multiplexing program 1303, and a multiplex number label grant program 1304.

Then, the CPU 1200 reads out the transfer destination search program 1301, the identifying program 1302, the P2P label multiplexing program 1303, and the multiplex number label grant program 1304 from the ROM 1300, and develops the programs in the RAM 1400. This enables the programs 1301 to 1304 to respectively function as a transfer destination search process 1201, an identifying process 1202, a P2P label multiplex process 1203, and a multiplex number label grant process 1204. As described above, the CPU 1200 corresponds to the transfer control unit 23 illustrated in FIG. 2.

Further, the HDD 1100 stores various types of information corresponding to the label table 231 illustrated in FIG. 2. The CPU 1200 reads out the information stored in the HDD 1100, and stores the information in the RAM 1400, and the processes 1201 to 1204 execute various types of processing using data stored in the RAM 1400.

According to one aspect of the packet communication device disclosed in the present application, effects of maintaining the label length within a specification and suppressing a waste of a band of a physical line to which a path is set are exerted.

## Claims

1. A packet communication device (11) comprising:
a search unit (233) that searches, when having received a packet, for a combination of a label that identifies a transfer path of the packet and an output unit that outputs the packet to a physical line to which the transfer path is set;
an identifying unit (234) that identifies a plurality of combinations including a common output unit that is the same output unit combined with a plurality of the labels from among the combinations searched by the search unit (233); and
a multiplex unit (235) that multiplexes, when the plurality of combinations including the common output unit has been identified by the identifying unit (234), the plurality of the labels combined with the common output unit in the packet to be output from the common output unit to the physical line.

2. The packet communication device (11) according to claim 1, further comprising:
a grant unit (236) that grants, to the packet, a multiplex number label that is another label indicating a multiplex number that is the number of the labels to be multiplexed by the multiplex unit (235);
wherein the search unit (233) searches, when having received the packet to which the multiplex number label has been granted, for a combination of the label and the output unit by the multiplex number indicated by the multiplex number label,
the identifying unit (234) identifies a plurality of combinations including the common output unit from among the combinations searched by the search unit (233) by the multiplex number, and
the multiplex unit (235) multiplexes, when the plurality of combinations including the common output unit has been identified by the identifying unit (234), the plurality of the labels combined with the common output unit in the packet to be output from the common output unit to the physical line.

3. A packet communication method comprising:
searching, when having received a packet, for a combination of a label that identifies a transfer path of the packet and an output unit that outputs the packet to a physical line to which the transfer path is set;
identifying a plurality of combinations including a common output unit that is the same output unit combined with a plurality of the labels from among the searched combinations; and
multiplexing, when the plurality of combinations including the common output unit has been identified, the plurality of the labels combined with the common output unit in the packet to be output from the common output unit to the physical line.

4. A packet communication program for causing a computer to execute processing of:
searching, when having received a packet, for a combination of a label that identifies a transfer path of the packet and an output unit that outputs the packet to a physical line to which the transfer path is set;
identifying a plurality of combinations including a common output unit that is the same output unit combined with a plurality of the labels from among the searched combinations; and
multiplexing, when the plurality of combinations including the common output unit has been identified, the plurality of the labels combined with the common output unit in the packet to be output from the common output unit to the physical line.
